# EUROPÄISCHE PATENTSCHRIFT

(11) **EP 1 295 656 B1**
(45) Veröffentlichungstag und Bekanntmachung des Hinweises auf die Patenterteilung: **21.02.2007**
(21) Anmeldenummer: 02021014.2
(22) Anmeldetag: 20.09.2002
(51) Int. Cl.: B22D 41/46, C21B 7/12, F27D 3/15, C04B 35/46, C21C 5/46

(54) **Stichlochmasse mit feinem TiO2, Verfahren zu deren Herstellung und deren Verwendung**
Tap hole mass with fine Tio2, method for the production and use
Masse de bouchage, procédé de préparation et utilisation

(30) Priorität: 24.09.2001 DE 10146871
(43) Veröffentlichungstag der Anmeldung: 26.03.2003
(73) Patentinhaber: Sachtleben Chemie GmbH, 47198 Duisburg (DE)
(72) Erfinder: Amirzadeh-Asl, Djamschid, Dr., 47445 Moers (DE); Fünders, Dieter, Dr., 47198 Duisburg (DE)
(74) Vertreter: Uppena, Franz

(56) Entgegenhaltungen:
- EP-A- 0 714 868
- DE-C- 3 904 473
- FR-A- 2 609 419

## Beschreibung

Die Erfindung betrifft eine Stichlochmasse mit feinem TiO₂, ein Verfahren zu deren Herstellung und deren Verwendung.

Schmelzreaktoren, wie z.B. Hochöfen und Kupolöfen weisen zum Verschließen und zur Entnahme der Schmelze eine Absticheinrichtung auf. Dabei wird ein Abstichkanal mit einer Stichlochmasse verschlossen. Die Stichlochmasse ist eine plastische Masse, die mit einer Stopfmaschine in den Abstichkanal gedrückt wird. Vor dem vollständigen Aushärten der Stichlochmasse kann nach der Gegenschlagtechnik eine Eisenstange in die Masse gedrückt werden, die bis in den Schmelzraum des Ofens hineinreicht. Der Ofen bleibt nach Aushärten der Stichlochmasse so lange verschlossen, bis die Stichlochmasse aufgebohrt wird oder nach der Gegenschlagtechnik die Eisenstange herausgezogen wird. Das Öffnen des Ofens wird als Abstechen bezeichnet.

Die Stichlochmasse muss für die chemische und physikalische Beanspruchung während des Schmelzprozesses eine gute Festigkeit haben. Die Stichlochmasse muss eine hohe Plastizität aufweisen, damit während des Stopfens das gesamte Abstichloch ausgefüllt wird und nach der Gegenschlagtechnik die Eisenstange leicht in die Masse eingedrückt werden kann. Die Plastizität ist wichtig, damit eine pilzartige Überlappung des Abstichloches auf der heißen Seite des Schmelzreaktors gebildet wird. Die Stichlochmasse muss eine gute Porösität haben, damit die flüchtigen Bestandteile nach außen entweichen können, um nicht die Stichlochmasse explosionsartig aus dem Abstichloch herauszusprengen. Die Stichlochmasse muss eine hohe Erosionsbeständigkeit bei steigender Temperatur und eine hohe Korrosionsbeständigkeit gegen Schlackenangriff aufweisen. Sie muss zusätzlich eine hohe Feuerfestigkeit und Korrosionsbeständigkeit gegenüber den im Roheisen und in der Schlacke vorhandenen Alkalimetallen haben.

Die EP 0714868 B1 beschreibt eine Stichlochmasse, die folgende Bestandteile in Gew.-% enthält:

| | |
|---|---|
| SiO₂ | 5 bis 80 |
| Al₂O₃ | 2 bis 70 |
| TiO₂ | 2 bis 40 |
| SiC | 0 bis 50 |
| Si₃N₄ | 0 bis 25 |
| Fe₂O₃ | 0 bis 6 |
| ZrO₂ | 0 bis 15 |
| Bindemittel | 2 bis 40 |

Als TiO₂-Quelle ist in der EP 0714868 B1 die Verwendung von Rückständen aus der TiO₂-Produktion vorgesehen. Bekannt ist auch die Verwendung von sehr kleinen Mengen natürlich vorkommender Titanverbindungen in Stichlochmassen.

Von Nachteil der bisher bekannten, Titanverbindungen enthaltenden Stichlochmassen ist, dass die spezifische Oberfläche der eingesetzten Titanverbindungen (Reststoffe oder natürliche Rohstoffe) zu gering ist, um in der für die Verfestigung der Stichlochmasse zur Verfügung stehenden kurzen Zeit die gewünschte Wirksamkeit der Titanverbindungen zu entfalten. Weiterhin ist in den Rest- oder Rohstoffen das in der Stichlochmasse wirksame TiO₂ mit ungewünschten Beimengungen veruneinigt oder als Eisentitanat gebunden, was sich negativ auf den gewünschten Prozess der Bildung von hochfeuerfesten Titancarbiden, Titannitriden und/ oder Titancarbonitriden auswirkt.

Aufgabe der vorliegenden Erfindung ist es, die Nachteile des Standes der Technik zu überwinden und eine TiO₂-haltige Stichlochmasse bereitzustellen, bei der im Vergleich zu bisherigen Systemen die Bildung von hochfeuerfesten Titancarbiden, Titannitriden und/ oder Titancarbonitriden begünstigt ist.

Gelöst wird die Aufgabe durch eine Stichlochmasse, die eine Titanverbindung enthält, wobei die Primärteilchen der Titanverbindung eine Teilchengröße von 0,01 bis 30 µm haben und die Sekundärteilchen der Titanverbindung (Agglomerate von Primärteilchen) eine mittlere Teilchengröße d₅₀ von 0,1 bis 200 µm haben und die Titanverbindung 30 bis 100 Gew.-% synthetisches TiO₂ enthält.

Durch Verwendung einer synthetisches TiO₂ enthaltenden Titanverbindung mit den beschriebenen Teilchengrößen ist die Bildung von Titancarbiden, Titannitriden und/oder Titancarbonitriden besonders begünstigt. Dies kommt daher, dass durch die hohe Feinheit und die große spezifische TiO₂-Oberfläche, verbunden mit der sehr guten TiO₂-Verteilung in der Stichlochmasse, das TiO₂ in der Stichlochmasse sehr reaktiv ist. Die dadurch begünstigte Bildung von Titancarbiden, -nitriden, -carbonitriden und/oder anderen hochfeuerfesten Titanverbindungen äußert sich in einer verbesserten Feuerfestigkeit und verbesserten Erosions- und Korrosionsbeständigkeit der erfindungsgemäßen Stichlochmasse. Je geringer die Primärteilchengröße, bzw. die Korngröße d₅₀ der Sekundärteilchen ist, desto geringer kann der Gesamtanteil TiO₂ in der Stichlochmasse bei sonst gleichen Eigenschaften der Stichlochmasse gewählt werden.

Bevorzugt haben die Primärteilchen der Titanverbindung in der Stichlochmasse eine Teilchengröße von 0,05 bis 20 µm, besonders bevorzugt von 0,1 bis 10 µm. Bevorzugt haben die Sekundärteilchen der Titanverbindung (Agglomerate von Primärteilchen) in der Stichlochmasse eine mittlere Teilchengröße d₅₀ von 0,2 bis 100 µm, besonders bevorzugt von 0,3 bis 70 µm; optimal ist eine mittlere Teilchengröße d₅₀ der Sekundärteilchen von 0,3 bis 30 µm.

Bevorzugt hat die Stichlochmasse einen Gehalt von 4 bis 40 Gew.-%, besonders bevorzugt von 10 bis 25 Gew.-%, an synthetischem TiO₂. Darüber hinaus kann die Stichlochmasse noch TiO₂ aus Reststoffen und/oder natürlichen Rohstoffen enthalten.

Die Druckfestigkeiten (gemessen nach 5 Stunden Sintern bei 1000 °C) der erfindungsgemäßen Stichlochmassen liegen in der Regel bei über 10 N/mm², wogegen die Druckfestigkeiten von bisher bekannten Stichlochmassen bei 4 bis 9 N/mm² liegen.

Der Gegenstand der Erfindung wird anhand der folgenden Beispiele näher erläutert:

### Beispiel 1: Herstellung einer Stichlochmasse, enthaltend 25 Gew.-% synthetisches TiO₂

28 kg eines synthetischen Titandioxids geringer Reinheitsstufe, welches 80 Gew.-% TiO₂ und 14 Gew.-% SiO₂ enthielt und eine Primärteilchengröße von 3 bis 8 µm und eine Sekundärteilchengröße d₅₀ von 25 µm aufwies, wurden mit 44 kg Al₂O₃ in einem Chargenmischer 2 Minuten homogenisiert. Nach Zugabe von 21 kg Kunstharz wurde das Gemisch in einer Strangpresse extrudiert. Das gepresste Material wurde 8 Tage bei Raumtemperatur ausgehärtet. Die erhaltene plastische Stichlochmasse wurde 5 Stunden bei einer Temperatur von 1.000 °C gesintert, um die thermische Belastung im Inneren eines Ofens zu simulieren. Der Gewichtsverlust betrug 18 Gew.-%. Anschließend wurde chemisch analysiert:
24,5 Gew.-% TiO₂, 54,3 Gew.-% Al₂O₃ und 7,8 Gew.-% SiO₂.

Die gesinterte Stichlochmasse hatte eine Druckfestigkeit von 10,5 N/mm².

### Vergleichsbeispiel A: Herstellung einer Stichlochmasse, enthaltend 25 Gew.-% TiO₂ aus Rückständen

35 kg Rückstand aus der TiO₂-Herstellung, enthaltend 60 Gew.-% TiO₂, 15 Gew.-% SiO₂ und 4 Gew.-% Al₂O₃, bei einem Wassergehalt von < 1 %, wurden mit 44 kg Al₂O₃ in einem Chargenmischer 2 Minuten homogenisiert. Nach Zugabe von 21 kg Kunstharz wurde das Gemisch in einer Strangpresse extrudiert. Das gepresste Material wurde 8 Tage bei Raumtemperatur ausgehärtet. Die erhaltene plastische Stichlochmasse wurde 5 Stunden bei einer Temperatur von 1.000 °C gesintert, um die thermische Belastung im Inneren eines Ofens zu simulieren. . Der Gewichtsverlust betrug 20 Gew.-%. Anschließend wurde chemisch analysiert:
25 Gew.-% TiO₂, 53 Gew.-% Al₂O₃ und 8 Gew.-% SiO₂.

Die gesinterte Stichlochmasse hatte eine Druckfestigkeit von 9 N/mm².

Der Vergleich des erfindungsgemäßen Beispiels 1 mit dem Vergleichsbeispiel A zeigt, dass die erfindungsgemäße Stichlochmasse bei ungefähr gleicher chemischer Zusammensetzung eine höhere Druckfestigkeit aufweist als eine nach dem Stand der Technik hergestellte Stichlochmasse.

### Beispiel 2: Herstellung einer Stichlochmasse, enthaltend 10 Gew.-% synthetisches TiO₂

10 kg reines Titandioxid mit einer Primärteilchengröße von 0,1 bis 0,3 µm und einer Sekundärteilchengröße d₅₀ von 0,4 µm wurden mit 40 kg Al₂O₃ und 10 kg SiO₂ in einem Chargenmischer 2 Minuten homogenisiert. Nach Zugabe von 21 kg Kunstharz wurde das Gemisch in einer Strangpresse extrudiert. Das gepresste Material wurde 8 Tage bei Raumtemperatur ausgehärtet. Die erhaltene plastische Stichlochmasse wurde 5 Stunden bei einer Temperatur von 1.000 °C gesintert, um die thermische Belastung im Inneren eines Ofens zu simulieren. Der Gewichtsverlust betrug 9 Gew.-%. Anschließend wurde chemisch analysiert:
10,2 Gew.-% TiO₂, 65 Gew.-% Al₂O₃ und 15 Gew.-% SiO₂.

Das Material hatte eine Druckfestigkeit von 11,7 N/mm².

Aus dem Vergleich der Beispiele 1 und 2 ist ersichtlich, dass die Druckfestigkeit mit abnehmender Primär- und Sekundärteilchengröße des TiO₂ zunimmt.

## Patentansprüche

1. Stichlochmasse, enthaltend eine Titanverbindung, **dadurch gekennzeichnet, dass** die Primärteilchen der Titanverbindung eine Teilchengröße von 0,01 bis 30 µm haben und die Sekundärteilchen der Titanverbindung (Agglomerate von Primärteilchen) eine mittlere Teilchengröße d₅₀ von 0,1 bis 200 µm haben und die Titanverbindung 30 bis 100 Gew.-% synthetisches TiO₂ enthält.

2. Stichlochmasse nach Anspruch 1, **dadurch gekennzeichnet, dass** die Primärteilchen der Titanverbindung eine Teilchengröße von 0,05 bis 20 µm haben.

3. Stichlochmasse nach Anspruch 1 oder 2, **dadurch gekennzeichnet, dass** die Primärteilchen der Titanverbindung eine Teilchengröße von 0,1 bis 10 µm haben.

4. Stichlochmasse nach einem der Ansprüche 1 bis 3, **dadurch gekennzeichnet, dass** die Sekundärteilchen der Titanverbindung (Agglomerate von Primärteilchen) eine mittlere Teilchengröße d₅₀ von 0,2 bis 100 µm haben.

5. Stichlochmasse nach einem der Ansprüche 1 bis 3, **dadurch gekennzeichnet, dass** die Sekundärteilchen der Titanverbindung (Agglomerate von Primärteilchen) eine mittlere Teilchengröße d₅₀ von 0,3 bis 70 µm haben.

6. Stichlochmasse nach einem der Ansprüche 1 bis 5, **dadurch gekennzeichnet, dass** die Stichlochmasse 4 bis 40 Gew.-% synthetisches TiO₂ enthält.

7. Stichlochmasse nach einem der Ansprüche 1 bis 6, **dadurch gekennzeichnet, dass** die Stichlochmasse 10 bis 25 Gew.% synthetisches TiO₂ enthält.

## Claims

1. A tap-hole mass containing a titanium compound, **characterised in that** the primary particles of the titanium compound have a particle size of from 0.01 to 30 µm and the secondary particles of the titanium compound (agglomerates of primary particles) have a mean particle size d₅₀ of from 0.1 to 200 µm and the titanium compound contains from 30 to 100 wt.% synthetic TiO₂.

2. A tap-hole mass according to claim 1, **characterised in that** the primary particles of the titanium compound have a particle size of from 0.05 to 20 µm.

3. A tap-hole mass according to claim 1 or 2, **characterised in that** the primary particles of the titanium compound have a particle size of from 0.1 to 10 µm.

4. A tap-hole mass according to any one of claims 1 to 3, **characterised in that** the secondary particles of the titanium compound (agglomerates of primary particles) have a mean particle size d₅₀ of from 0.2 to 100 µm.

5. A tap-hole mass according to any one of claims 1 to 3, **characterised in that** the secondary particles of the titanium compound (agglomerates of primary particles) have a mean particle size d₅₀ of from 0.3 to 70 µm.

6. A tap-hole mass according to any one of claims 1 to 5, **characterised in that** the tap-hole mass contains from 4 to 40 wt.% synthetic TiO₂.

7. A tap-hole mass according to any one of claims 1 to 6, **characterised in that** the tap-hole mass contains from 10 to 25 wt.% synthetic TiO₂.

## Revendications

1. Masse de bouchage pour trou de coulée, comprenant un composé du titane, **caractérisée en ce que** les particules primaires de ce composé du titane ont une taille de 0,01 à 30 µm et les particules secondaires (agglomérats de particules primaires) de ce composé du titane ont une taille moyenne d₅₀ de 0,1 à 200 µm, et **en ce que** ce composé du titane contient 30 à 100 % en poids de dioxyde de titane synthétique.

2. Masse de bouchage pour trou de coulée, conforme à la revendication 1, **caractérisée en ce que** les particules primaires du composé du titane ont une taille de 0,05 à 20 µm.

3. Masse de bouchage pour trou de coulée, conforme à la revendication 1 ou 2, **caractérisée en ce que** les particules primaires du composé du titane ont une taille de 0,1 à 10 µm.

4. Masse de bouchage pour trou de coulée, conforme à l'une des revendications 1 à 3, **caractérisée en ce que** les particules secondaires (agglomérats de particules primaires) du composé du titane ont une taille moyenne d₅₀ de 0,2 à 100 µm.

5. Masse de bouchage pour trou de coulée, conforme à l'une des revendications 1 à 3, **caractérisée en ce que** les particules secondaires (agglomérats de particules primaires) du composé du titane ont une taille moyenne d₅₀ de 0,3 à 70 µm.

6. Masse de bouchage pour trou de coulée, conforme à l'une des revendications 1 à 5, **caractérisée en ce qu'**elle contient 4 à 40 % en poids de dioxyde de titane synthétique.

7. Masse de bouchage pour trou de coulée, conforme à l'une des revendications 1 à 6, **caractérisée en ce qu'**elle contient 10 à 25 % en poids de dioxyde de titane synthétique.
